(19) **Europäisches Patentamt**

**European Patent Office**

**Office européen des brevets**

(11) **EP 0 709 664 B1**

(12) **EUROPEAN PATENT SPECIFICATION**

(45) Date of publication and mention
of the grant of the patent:
**16.08.2001 Bulletin 2001/33**

(51) Int Cl.$^7$: **G01M 15/00**

(21) Application number: **94117153.0**

(22) Date of filing: **31.10.1994**

(54) **Detecting misfire with acceleration discrimination**

Fehlzündungsfeststellung durch Beschleunigungsunterscheidung

Détection des râtés de combustion par discrimination d'accélération

(84) Designated Contracting States:
**DE ES FR GB IT**

(43) Date of publication of application:
**01.05.1996 Bulletin 1996/18**

(73) Proprietor: **MOTOROLA, INC.**
**Schaumburg, IL 60196 (US)**

(72) Inventors:
• **Remboski, Donald J.**
**Dearborn, Michigan 48126 (US)**
• **Frankowski, David**
**Woodhaven, Michigan 48116 (US)**
• **Bush, Kevin J.**
**Northville, Michigan 48167 (US)**
• **Plee, Steven L.**
**Brighton, Michigan 48116 (US)**
• **Foley, John F.**
**Novi, Michigan 48374 (US)**

(74) Representative: **Hudson, Peter David et al**
**Motorola,**
**European Intellectual Property,**
**Midpoint,**
**Alencon Link**
**Basingstoke, Hampshire RG21 7PL (GB)**

(56) References cited:
**EP-A- 0 306 905** **EP-A- 0 441 603**
**WO-A-91/13333** **DE-A- 2 658 614**
**DE-A- 2 912 773** **DE-A- 3 933 008**
**US-A- 4 424 709** **US-A- 5 200 899**
**US-A- 5 278 760** **US-A- 5 303 158**

**Description**

Field of the Invention

This invention is related to the field of misfire detection within an engine, and more specifically to a system for detecting a misfire condition by interpreting acceleration activity of a running engine.

Background of the Invention

Various systems are employed on engines for detecting a misfire of a combustion event. If a cylinder repeatedly misfires, fuel is typically shut off to that cylinder. This prevents the passage of a large amounts of unburned fuel to an exhaust catalyst. This is done to prevent degradation of the catalyst's performance and useful life.

One type of system is coupled to an ignition system for detecting ignition related misfires. This scheme is deficient because it can only detect ignition related misfiring conditions which are a subset of the possible misfiring conditions and therefore lack the full function necessary to accurately determine misfire over a broad range of operating conditions.

Another scheme is to measure a temperature of the exhaust gas stream from an engine. Also, the content of carbon monoxide and hydrocarbons may be sensed to determine a misfire condition. Both of these schemes are plagued by slow response speeds of the sensory systems and the limited durability of the sensors in the hostile automotive environment.

Another scheme monitors average angular velocity of an engine's crankshaft. A signature analysis is performed on this average engine crankshaft velocity in an attempt to predict a misfire condition. Other schemes rely on measuring average engine crankshaft acceleration. Both of these schemes suffer from inaccuracy because they rely on multi-combustion cycle averaging. This is problematic because these schemes are inaccurate and unreliable during transient operating conditions and other conditions with strong combustion variability. Combustion variability comes in many forms including crankshaft torsional effects, due to the resonant characteristics of the crankshaft, and effects of various engine accessories such as an alternator, an air conditioner compressor, a fan etc.

Additionally, the misfire component of the sensed signal varies considerably in magnitude and frequency over the full operating range of the engine. Since averaging schemes rely on predicting a change from a steady state condition they inherently loose accuracy under these transient operating conditions. Also, non-combustion related effects are substantial. These effects are typically attributable to variations in engine load torque induced by reciprocating inertia torque, and crankshaft torsional vibration.

Another scheme is to measure a pressure or flow fluctuation in an exhaust path of a combustion chamber, through the employment of a pressure transducer. Through signature analysis, an output of this pressure transducer is compared to a predetermined signal, for detecting a misfire condition.

Other systems have considered analysis of audio output from an engine. It relies on analyzing the engine firing performance by coupling an audio sensor to an output of an exhaust system for measuring a frequency spectrum of exhaust noises.

This scheme, and the former exhaust measurement scheme, also have many deficiencies. For instance, it is substantially dependent on the characteristics of the coupling medium, in this case the exhaust system. The exhaust system, includes an exhaust manifold, coupled to an exhaust tube, that is coupled to a catalytic converter, that is coupled to a muffler, that is coupled to an exhaust pipe. Because of this structure, this arrangement is susceptive to interference from non-engine performance related audio noise sources including engine and vehicle vibrations that are coupled into the exhaust system. A resonance of this coupling medium may add to the harmonic spectra provided by the engine. Also, because of its large volumetric size, the exhaust system acts like a low pass filter that reduces the available signal thus effecting the accuracy of the measurement. Additionally, the propagation time of audio output from the engine will change as the exhaust system heats up, or cools down. Further, accuracy under transient engine operating conditions will be impaired by the time lag associated with the length of the exhaust system. Because of this, engine synchronous tuning cannot be guaranteed. Also, the length that the individual cylinder audio output traverses varies with each cylinder because of the different exhaust runner lengths of the exhaust manifold. This will cause a variable delay from when the exhaust valve opens to when it is sensed. This variable length coupling from each cylinder to the sensory means may also shift the harmonic spectra provided by the engine. This is because of the pressure wave reflections that are caused by the different amount of time a pressure pulse will take to travel from an exhaust valve to the audio sensor in different cylinders. Further, an engine's exhaust system is tuned for optimal engine performance. By using this scheme, this tuning is more complex because of the additional concern of providing for an audio sensor in the tuning path. Also the audio sensor has durability limitations.

In summary, prior art misfire detection schemes are inaccurate, slow to respond to transient engine operating conditions, and incomplete in their ability to sense a broad scope of misfire conditions possible in an operating engine.

What is needed is an improved system for detecting misfire in internal combustion engines that is accurate, able to respond to transient engine operating conditions, able to sense a broad scope of misfire conditions possible in an operating engine, requires minimum calibration, and can be easily applied to different engine families. This need is satisfied with the system of claim 1.

Brief Description of the Drawings

FIG. 1 is a chart illustrating an engine firing spectra attributable to a normal firing condition with all cylinders firing as designed;
FIG. 2 is a chart illustrating an engine firing spectra attributable to a misfiring condition with one cylinder not firing as designed;
FIG. 3 is a system block diagram of a misfire detection system, as described in a preferred embodiment;
FIG. 4 is a system block diagram of a misfire detection system, as described in an alternative embodiment including an engine speed responsive spectral analysis means;
FIG. 5 is a system block diagram of a misfire detection system, as described in an alternative embodiment, including an engine mounted accelerometer;
FIG. 6 is a system block diagram of a misfire detection system, as described in an alternative embodiment, including an in-cylinder sensor;
FIG. 7 is a system block diagram of digital filters used in the preferred, and alternative embodiments for extracting, torsional crankshaft vibrations, firing related spectra, and misfiring related spectra all in the cycles/revolution domain; and
FIG. 8 is a system block diagram of digital filters used in alternative embodiments for extracting, torsional crankshaft vibrations, firing related spectra, and misfiring related spectra, all in the frequency domain.

Detailed Description of a Preferred Embodiment

In a preferred embodiment, a system for detecting the presence of a misfire condition by monitoring spectral activity of a running engine is described.

In the preferred embodiment a spectra related to an acceleration characteristic, indicative of performance of a combustion process, of a running engine is considered.

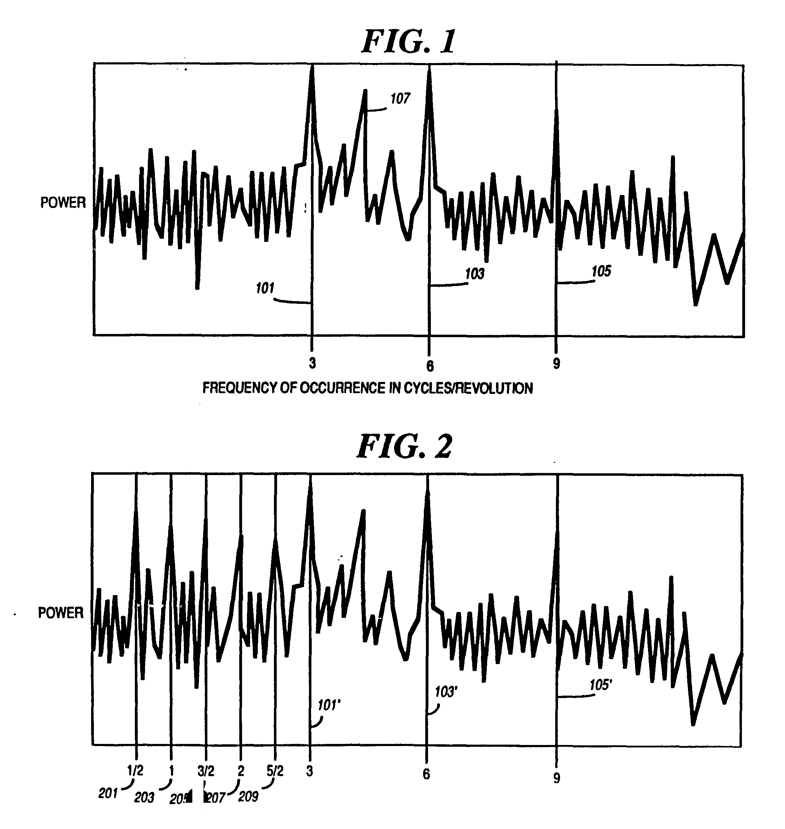

The charts of FIG. 1 and FIG. 2 illustrate the acceleration spectral behavior in a cycles/revolution domain indicative of the combustion performance of a running engine. Note that representation in the cycles/revolution domain is convenient because acceleration fluctuations due to combustion, engine imbalance, and engine accessories (such as an alternator, an air conditioner compressor, a fan etc.) remain at the same cycles/revolution occurrence frequency regardless of engine speed.

In FIG. 1 an engine firing spectra attributable to a normal firing condition of a four stroke six cylinder engine is shown. Note that the power of the acceleration fluctuations is particularly prominent at a series starting at 3 101, 6 103, and 9 105 cycles/revolution. Although higher order harmonics, or partials, are in the series they are insignificant compared to systemic noise. Also note a strong response shown by reference number 107. This represents a spectral response directly resulting from a crankshaft torsional effect. Note that the normal firing spectral phenomena is independent of engine speed in the cycles/revolution domain, and the torsional vibration spectra is variable in the cycles/revolution domain given that the torsional vibration has a constant frequency behavior.

FIG. 2 shows an engine firing spectra attributable to a misfiring condition with one cylinder not firing. Note that power is still particularly prominent at a series starting at 3 101', 6 103', and 9 105' cycles/revolution but also at 1/2 201, 1 203, 3/2 205, 2 207, and 5/2 209 cycles/revolution. This sub-harmonic series behavior is indicative of only one cylinder misfiring. If a pair of cylinders misfires, predominant energy would appear at a series starting with 1 and 2 cycles/revolution. This behavior is fairly common, and is attributable to a failure of a shared ignition coil, typically found in contemporary ignition systems.

Of course, in engine arrangements with a different number of cylinders, a misfiring ignition pair would have a different but similarly predictable spectral behavior. Additionally, in non-even firing engines the spectral behavior of the acceleration characteristic would have a correspondingly predictable spectral behavior.

The fundamental, or lowest order firing frequency for all engines, either two stroke or four stroke is representable by the following relationship:

$$f = \frac{360}{\Delta\theta} \text{ (cycles/revolution)}$$

where:

360 = degrees/revolution

and for even firing engines:

Δq = number of degrees between cylinder firings

and for uneven firing engines:

Δq = number of degrees between a repeat in the firing pattern

The fundamental, or lowest order misfire frequency for all even firing engines, is representable by the following relationship:

$$f_{2\text{-stroke}} = 1 \text{ cycle/revolution}$$

$$f_{4\text{-stroke}} = 1/2 \text{ cycle/revolution}$$

The complete series for the spectral relationship presented above can be approximated deterministically as follows. The torque on the engine crankshaft due to gas pressure for a single cylinder engine can be approximated by the following equation:

$$\frac{T_p}{T_m} = 1 + \sum_{n=1/2,\,1,\,3/2,\,2,\,\ldots}^{\infty} W_n \, \sin\left(n\theta + \phi_n\right)$$

where:

$T_p =$ instantaneous pressure torque

$T_m =$ mean torque of the engine

$W_n, f_n =$ coefficients that vary with engine type and operating conditions

$n =$ harmonic order

$q =$ engine rotational position

For a typical four stroke engine with an even firing interval, the torque vectors add when n is a multiple of the number of cylinders divided by two, and cancel for all other values of n under normal operating conditions. However, as displayed in FIG. 2, and mentioned earlier, when a single cylinder misfires, all of the lower orders (n = 1/2, 1, 3/2, 2, ...) are present in addition to the normal firing order. When a misfire occurs in pairs on opposite stokes in the firing order, only the higher orders are present, as mentioned earlier. Thus, misfire detection can be accomplished by observing the spectral presence of the series n = 1/2, 1, 3/2, 2, ... This will be valid at all engine loads and speeds.

A chart illustrating characteristic frequencies for a four stroke, even firing engine for different cylinder arrangements, is provided as follows:

TABLE 1

| | | additional frequencies (below firing) | |
|---|---|---|---|
| No of cylinders | Firing frequencies | 1 cylinder misfire | misfire Ignition pair |
| 4 | n = 2, 4, 6, .... | n = 1/2, 1, 3/2, | n = 1 |
| 6 | n = 3, 6, 9, ... | n = 1/2, 1, 3/2, | n = 1, 2 |
| 8 | n = 4, 8, 12, ... | n = 1/2, 1, 3/2, | n = 1, 2, 3 |

where n = cycles/revolution

Thus, spectra resulting from a misfiring condition will be located a fixed spectral distance below the spectra associated with a normal firing condition.

A system for recognizing the aforementioned behavior includes a spectral sensing means, coupled to a running engine, for providing a spectral signal representative of the spectral activity of the running engine, indicative of the engine's performance. In the preferred embodiment a crankshaft position sensor is used to measure angular displacement, and is then conditioned to provide a composite signal representative of crankshaft acceleration. Other embodiments, detailed later, will include other sensing mechanisms for measuring motion associated with an acceleration characteristic, indicative of performance of the combustion process of the running engine.

A spectral discrimination means receives the composite signal provided by the measurement means, and provides a normal firing signal that corresponds to spectral energy attributable to a portion of the composite signal representative of a normal firing condition. If a misfiring condition exists, the spectral discrimination means further provides a misfire signal, corresponding to spectral energy attributable to another portion of the composite signal representative of the misfiring condition of the running engine. Then a misfire indication is provided if a magnitude of the misfire signal exceeds a magnitude of the firing signal by a predetermined factor.

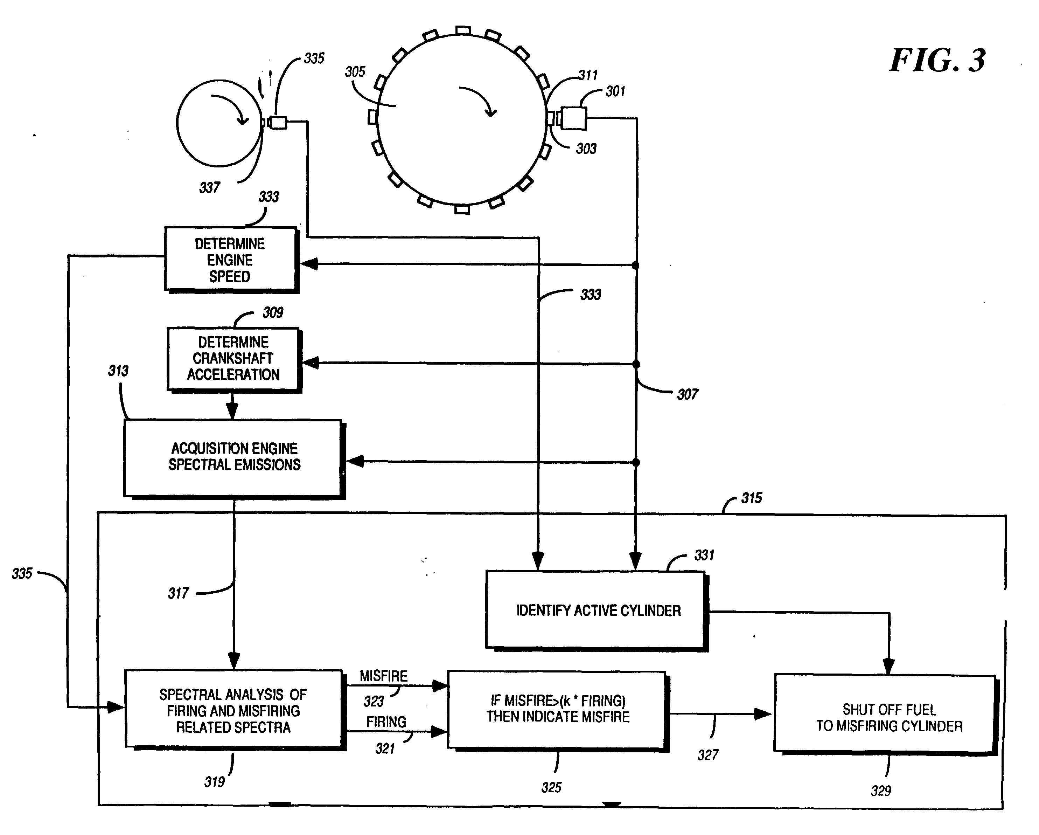

FIG. 3 shows a system block diagram of a misfire detection system that applies this behavior recognition strategy to render improved detection of a misfire condition in a running engine. In the preferred embodiment a six cylinder, 4 stroke engine is used. In the preferred embodiment, a central element for detecting a misfire condition is implemented using discrete time signal processing elements.

Alternatively, those skilled in the art will recognize other equivalent embodiments such as those using conventional continuous time signal processing elements, including conventional analog circuits. Discrete time signal processing was chosen because of the benefits it has over continuous time signal processing elements. These benefits include fewer components, stable deterministic performance, no aging, no drift, no adjustments, easily tunable for various engines, high noise immunity, and self test capability.

As mentioned earlier, a crankshaft displacement sensor is used to measure angular displacement, which is then conditioned to provide a composite signal representative of crankshaft acceleration due to the performance of the combustion process in the running engine. To accomplish this measurement, in FIG. 3 a sensor 301 measures a passing tooth 303 on a rotating wheel 305, that is attached to a running engine's crankshaft. This practice of using a toothed wheel on a crankshaft is commonplace in the field of engine control. Of course, those skilled in the art will recognize many other, substantially equivalent, means and methods to measure angular displacement. An engine angular displacement signal 307 is provided by the sensor 301. In the preferred embodiment, as the engine runs, the angular displacement signal 307 is typically a logic level signal that transitions when the sensor 301 senses the tooth 303 and a subsequent space 311. Therefore, as the toothed wheel 305 rotates, responsive to the combustion process in the running engine, the angular displacement signal 307 is substantially a rectangular waveform responsive to angular velocity, or engine speed.

This angular displacement signal 307 is provided to element 309. Element 309 determines an acceleration of the running engine's crankshaft. Those skilled in the art will recognize several means and methods for doing this. In the preferred embodiment, elapsed time intervals between adjacent transitions of the rectangular wave 307 are compared to determine crankshaft acceleration. It is preferable to filter this determined acceleration to remove any torsional vibrations or other acceleration effects not related to misfire behavior. This is described later.

The acceleration information is then provided to element 313. In the preferred embodiment, element 313 samples the acceleration information synchronous with engine angular displacement. As mentioned earlier the spectral phenomena of the acceleration information of interest, that is for detecting engine firing and misfiring spectra, is independent of engine speed, if engine synchronous sampling is used. Thus, in this embodiment, element 313 is simply a gate controlled by the angular displacement signal 307. Element 313 outputs, a composite signal, or acquisitioned engine crankshaft acceleration signal 317, representative of engine spectral emissions related to the combustion performance of the running engine.

As mentioned earlier, the preferred embodiment relies on discrete time signal processing elements. Element 315 represents a Digital Signal Processor, or DSP. The constituent system level block diagram elements illustrated within element 315 represent hardware means microcoded with appropriate software routines. In this case a Motorola DSP56001 315 device is used. The Motorola DSP56001 has the capability of executing over ten million instructions per second, and with 24 bit wide data paths provides 144 dB of dynamic range. Of course, those skilled in the art will recognize other equivalently useful DSP devices, or hardwired, or other microcoded approaches that have substantially the same function.

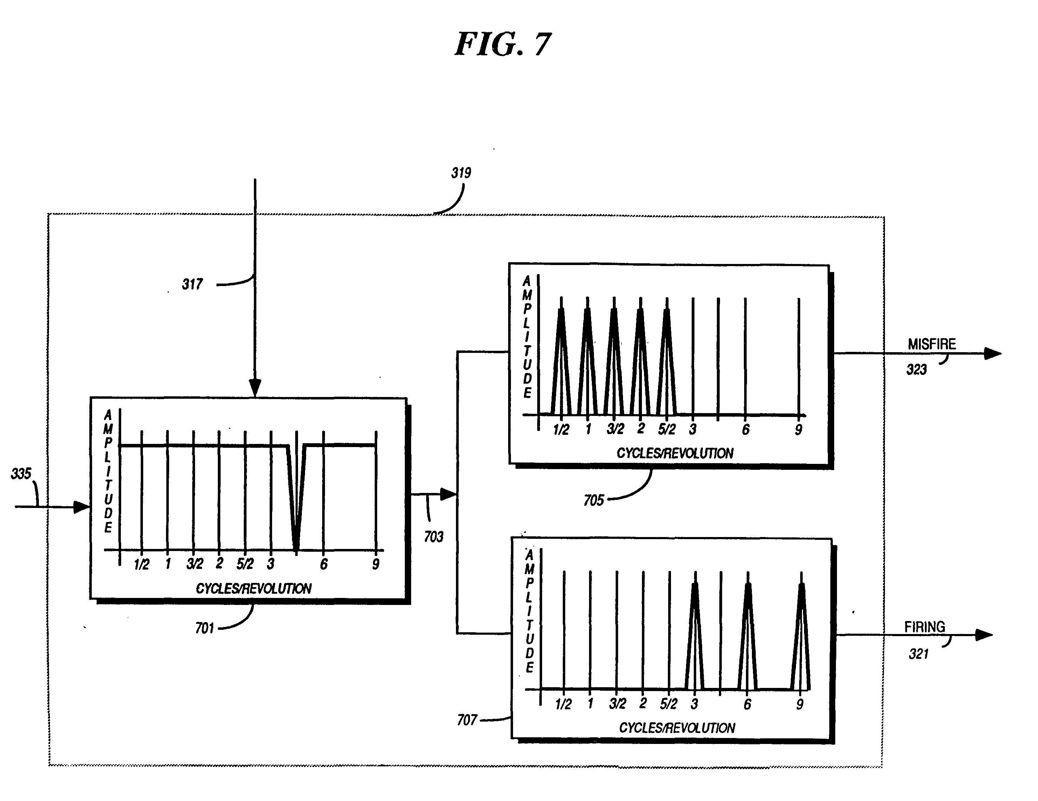

The key element of this implementation includes a digital filter, represented by element 319. This filter is comprised of three separate filters as detailed in FIG. 7.

Referring to FIG. 7 this filter 319 includes a noise filtering means, or a notch filter 701 located to eliminate any effect from the crankshaft torsional spectral element. This noise filtering means 701, or noise spectral discrimination means, receives a composite spectral signal, in this case the acquisitioned engine crankshaft acceleration signal 317, and provides a noise filtered signal 703 absent of a predetermined noise component of the composite spectral signal. In this case the predetermined noise component is the crankshaft torsional vibration. Because the cycles/revolution domain is used in this embodiment, and the torsional vibration spectral element is constant in the frequency domain, this filter 701 must be tuned synchronous with engine speed. To this end, element 333 determines engine speed and provides an output variable 335 corresponding to the speed of the engine crankshaft measurement apparatus 301, 303, 305, 311, 307.

The tuning of filter 701 is accomplished by deriving variable filter coefficients that correspond to the engine speed. This is particularly convenient in the Motorola DSP56001 and is accomplished by the use of a lookup table with alternative filter coefficients. Alternatively, recalculation of the filter coefficients may be used to, in effect, tune the filter 701 responsive to the signal 335 indicative of engine speed. Also, those skilled in the art will recognize the method of re-sampling the data into the frequency domain, applying a fixed filter, and re-sampling into the cycles/revolution domain as another alternative. The filter 701 provides the noise filtered signal 703 to both a firing filter bank 707, and misfiring filter bank 705.

As noted above for the notch filter 701, filters 705 and 707 are also designed to consider spectral energy in the cycles/revolution domain. In other embodiments, some described herein, these filters 701, 705, and 707 are designed to operate on data in the frequency domain.

The firing filter bank 707 is designed to extract spectral energy expected from the noise filtered signal 703 related to normal firing at 3, 6, and 9 cycles/revolution. Alternatively, if lesser accuracy is needed, the firing filter bank 707 can directly extract spectral energy expected from the composite spectral signal 317. The firing filter bank 707 provides a normal firing signal 321, corresponding to spectral energy, or power attributable to a portion of the noise filtered signal 703 representative of energy caused by a normal firing condition in the running engine.

The misfiring filter bank 705 is designed to extract spectral energy expected from the noise filtered signal 703 related to misfiring at 1/2, 1, 3/2, 2, and 5/2 cycles/revolution. It provides a misfire signal 323, corresponding to spectral energy attributable to another portion of the composite signal representative of a misfiring condition in the running engine.

Note that in the preferred embodiment a six cylinder, 4 stroke engine is used. If another engine configuration is used the proper spectral relationships are shown in Table 1.

Of course, those skilled in the art will recognize other uses for the notch filter 701, including the elimination of other unwanted systemic noise, such as that due to force imbalances, road related disturbances, and engine accessory related noise. To filter out some of these other phenomena, multiple notches, or differently tuned rejection bands, may be used.

The digital filters 701, 705, 707 are implemented as Finite Impulse Response, or FIR filters. Alternatively Infinite Impulse Response, or IIR filters may be used. A substantial amount of excellent contemporary literature is available on the subject of digital filter design. This includes a text book published by McGraw-Hill Inc., in 1979, and authored by Andreas Antoniou, entitled DIGITAL FILTERS: ANALYSIS AND DESIGN. Another excellent reference published by Prentice Hall Inc., 1990, is entitled DIGITAL SIGNAL PROCESSING IN VLSI. In the embodiments described herein the DSP56001 315 is programmed to implement these digital filters. FIR filters are very commonly designed using this DSP 315.

In the preferred embodiment, and some of the others described later, the fact that the spectral phenomena of interest is independent of engine speed in the cycles/revolution domain makes it convenient to apply engine synchronous sampling. To do this, the digital filter coefficients, for normal firing at 3, 6, and 9 cycles/revolution, and for misfiring at 1/2, 1, 3/2, 2, and 5/2 cycles/revolution are specified in terms of the sampling, or data, rate in accordance with the Nyquist Theorem in the cycles/revolution domain. Therefore, because the digital filters' coefficients have a fixed relationship to the sampling rate, as the engine changes speed, since the phenomena of interest remains constant in the cycles/revolution domain the filters 701, 705, 707, in effect, track.

After filtering, the normal firing signal 321 and the misfire signal 323 are provided from the digital filters 705 and 707 to element 325. Element 325 provides a misfire indication signal 327 when a magnitude of the misfire signal 323 exceeds a magnitude of the firing signal 321 by a predetermined factor. This predetermined factor is preferably adjustable for different engine families.

The misfire indication signal 327 is preferably provided to element 329 which shuts off the fuel delivery to the misfiring cylinder. The misfire indication signal 327 may also be provided outside this system for reporting a misfire condition to another engine controller, or diagnostic apparatus.

To identify the particular cylinder coincident with the misfire indication signal 327, element 331 is provided. Element 331 considers the angular displacement signal 307 and a TDC marker signal 333 to compute the cylinder currently in the combustion process. Another sensor 335 and tooth 337 are attached to a camshaft of the engine and used to provide the TDC, or cylinder identification, marker signal 333. Many apparatus and methods of identifying and disabling a misfiring cylinder, once the difficult task of accurately identifying misfire is complete, is well known to those skilled in the art of engine design.

Note that with the approach described in the preferred embodiment the acceleration characteristic measured, associated with firing and misfiring combustion performance, is independent of measurement path length between the running engine, exemplified by the toothed wheel 305 and the sensory system, represented by the sensor 301. This is also true in a multiple cylinder design. This is a substantial advantage over some prior art systems. Additionally, having free space as a coupling media asserts no load on the engine and has no substantial effect on the characteristic measured, as in prior art systems that relied on a necessarily burdensome coupling medium.

The elegance of this embodiment includes a fixed, stable spectral discrimination means that relies on an input data rate, or sample rate directly derived by engine speed. This engine synchronous sampling approach is not possible with a tuned analog filter implementation used in prior art, but is convenient with a digital filter. Also, since a single point in the engine is used to measure the combustion performance, the measurement is independent of measurement path length and geometry, thus no measurement path coupling or multi-path errors are introduced as in the prior art.

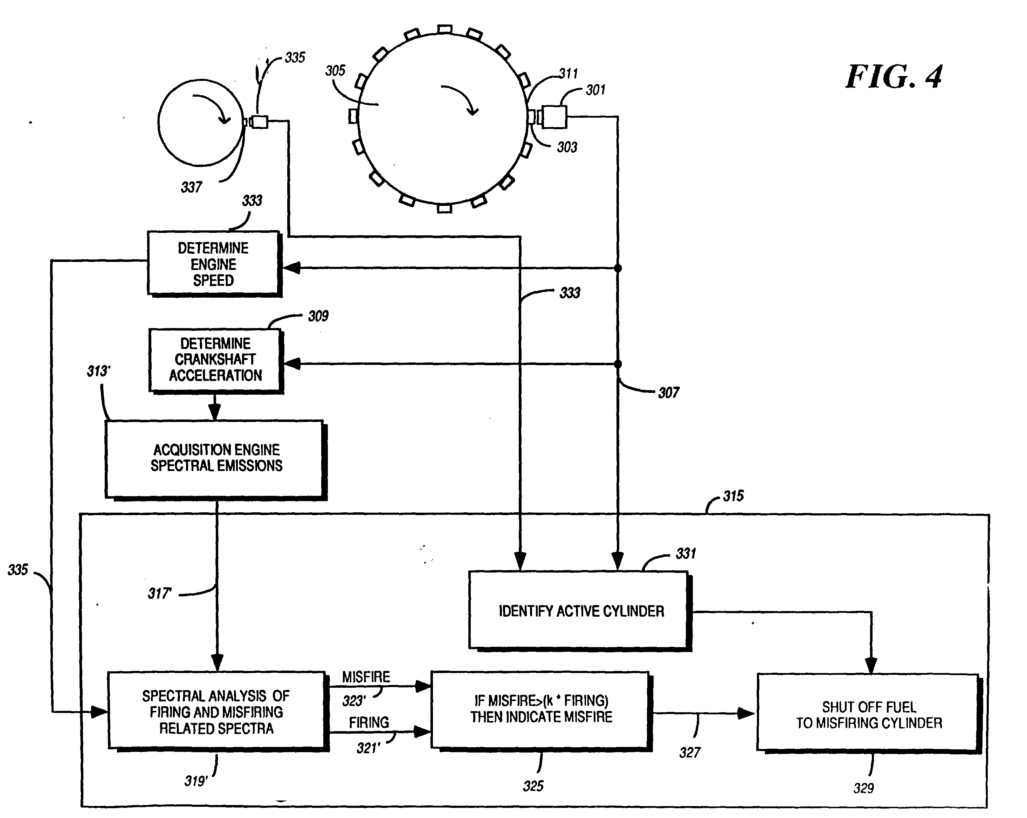

Other embodiments are shown in FIG.'s 4, 5, and 6. In FIG. 4 the same crankshaft sensory system is employed with digital filters associated with the frequency domain, rather than the cycles/revolution domain.

Element 313' inputs the crankshaft acceleration information provided by element 309 at a fixed sampling rate. Of course, this fixed sampling speed is chosen to be high enough to conform to the Nyquist Theorem requirements to ensure that aliasing does not occur. Element 313' is constructed using a gate controlled by a clocking oscillator, and provides an output 317' at a constant sample rate to element 319'.

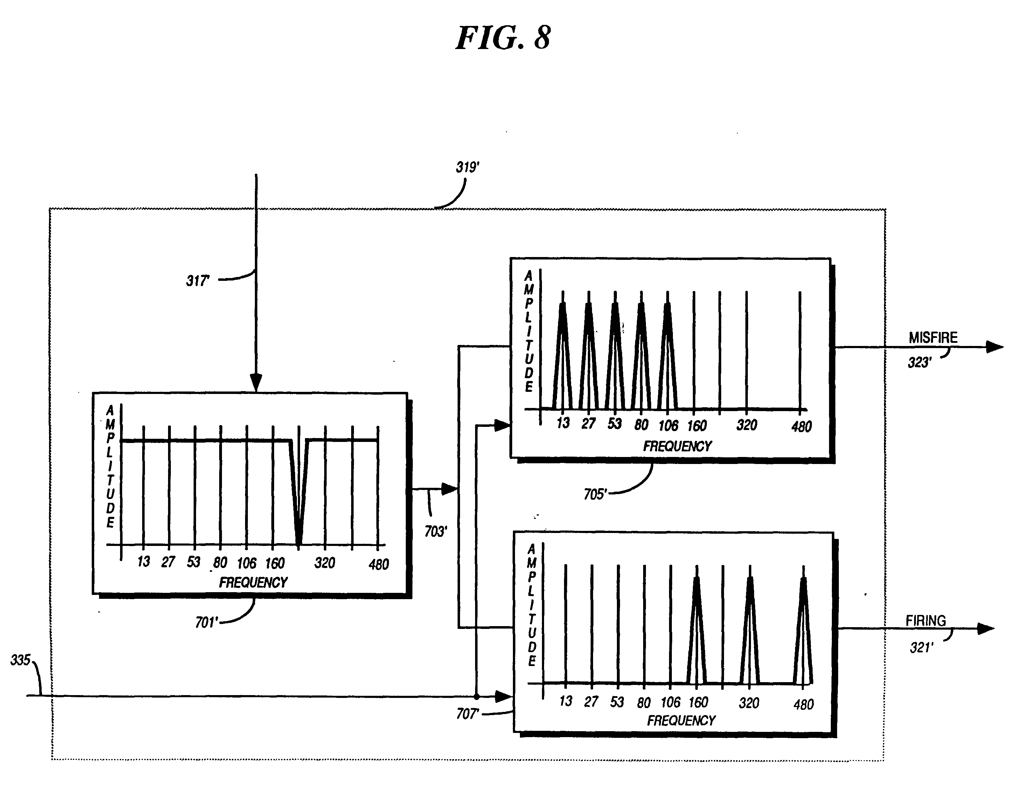

Referring to FIG. 8 this filter 319' has substantially the same structure as found in the filter 319, detailed in FIG. 7. However, because this approach uses a fixed sampling rate, in time, the data, represented by 317', is in the frequency domain. Thus, the digital filter 701' can be stationary and the digital filters 705' and 707' must be tunable to track engine speed. This is because since the sampling rate is fixed, and the torsional vibration spectral phenomena is fixed in the frequency domain, digital filter 701' can be fixed. Also, the firing and misfiring spectral phenomena of interest does not remain constant in the frequency domain as it did in the preferred embodiment in the cycles/revolution domain, and therefore these filters 705', 707' must be tuned to track engine speed. In this embodiment the engine speed variable 335 is provided to tune filters 705' and 707'.

As described in the preferred embodiment, preferably, the filter 701' is designed as a notch filter, but here the filter coefficients are fixed and are specified in the frequency domain. Specifically, filter 701 is tuned fixed to 240 Hz which corresponds to 4.5 cycles/revolution at 3,210 RPM. Note that this filter remains stationary because the effective crankshaft torsional vibration effect is fixed in the frequency domain.

The output 703', or noise filtered signal, of this filter 701' provides the torsional vibration free signal to the other filters 705', and 707'.

Filter 707' is configured as a digital multiple bandpass filter having a response that discriminates a spectrum corresponding to frequencies representing 3, 6, and 9 cycles/revolution at a known engine speed. The digital filter's 707' coefficients are variable and are specified in the frequency domain. Specifically, filter 707' is tuned to 160 Hz, 320 Hz, and 480 Hz for an engine speed of 3,210 RPM. If the engine speed is reduced by 50% to 1,605 RPM then new filter coefficients are looked up as mentioned earlier, and the filter 707' is correspondingly tuned to 80 Hz, 160 Hz, and 240 Hz.

Filter 705' is also configured as a digital multiple bandpass filter having a response that discriminates a spectrum corresponding to frequencies representing misfiring at 1/2, 1, 3/2, 2, and 5/2 cycles/revolution. The digital filter's 705 coefficients are variable and are specified in the frequency domain. Specifically, filter 705 is tuned to 27 Hz, 53 Hz, 80 Hz, 106 Hz, and 160 Hz for an engine speed of 3,210 RPM. If the engine speed is reduced by 50% to 1,605 RPM then new filter coefficients are looked up, as mentioned earlier, and the filter 705 is correspondingly tuned to 13 Hz, 27 Hz, 40 Hz, 53 Hz, and 80 Hz.

Each of these filters, 707', and 705' output a signal 321' and 323' for indicating spectral energy located at a predicted firing frequencies and misfiring frequencies correspondingly. The other elements perform as described earlier in the discussion about FIG. 3.

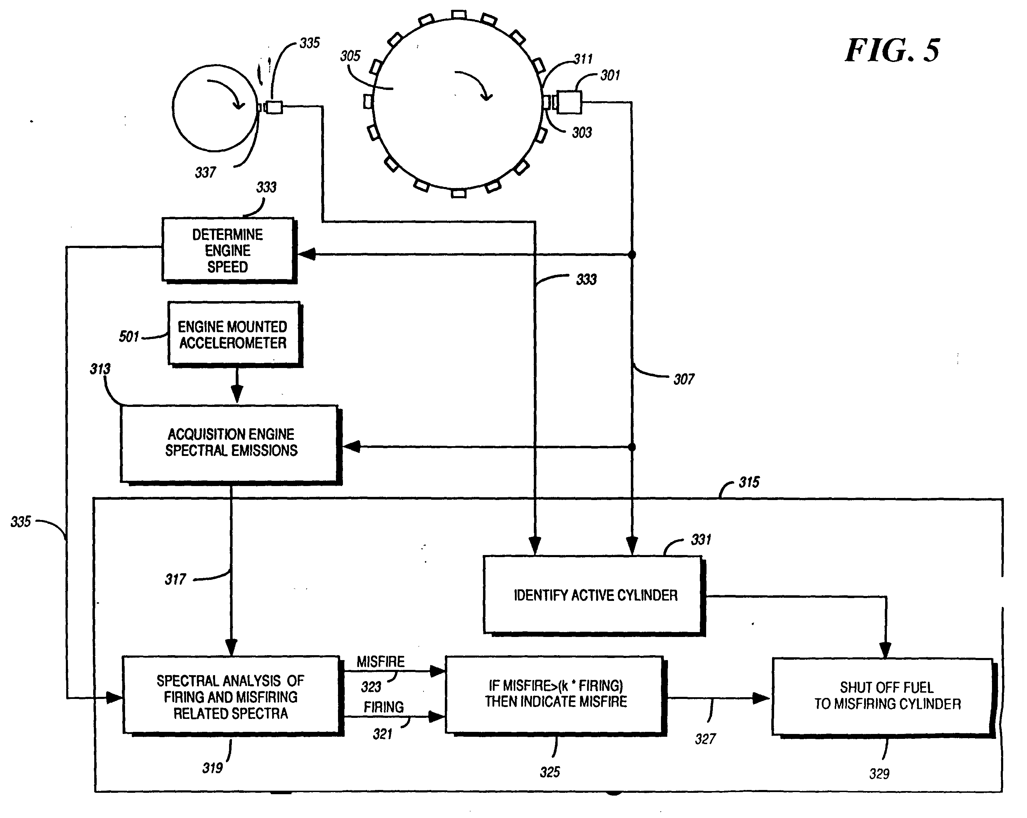

In FIG. 5 an engine mounted accelerometer 501, conveniently the same one that may be used for knock detection, is employed to measure the combustion performance. Aside from the substitution of the sensory means this embodiment works the same as the preferred embodiment.

Although FIG. 5 is shown using the engine synchronous sampling approach common to measurement in the cycles/revolution domain the fixed sample rate, or frequency domain, approach may alternatively be applied. In addition to the earlier stated advantages, this approach shares a sensor with a to be provided knock detection function. This is significant to cost savings, factory installation and field repair ease and field reliability. Additionally, this approach is insensitive to crankshaft torsional vibrations.

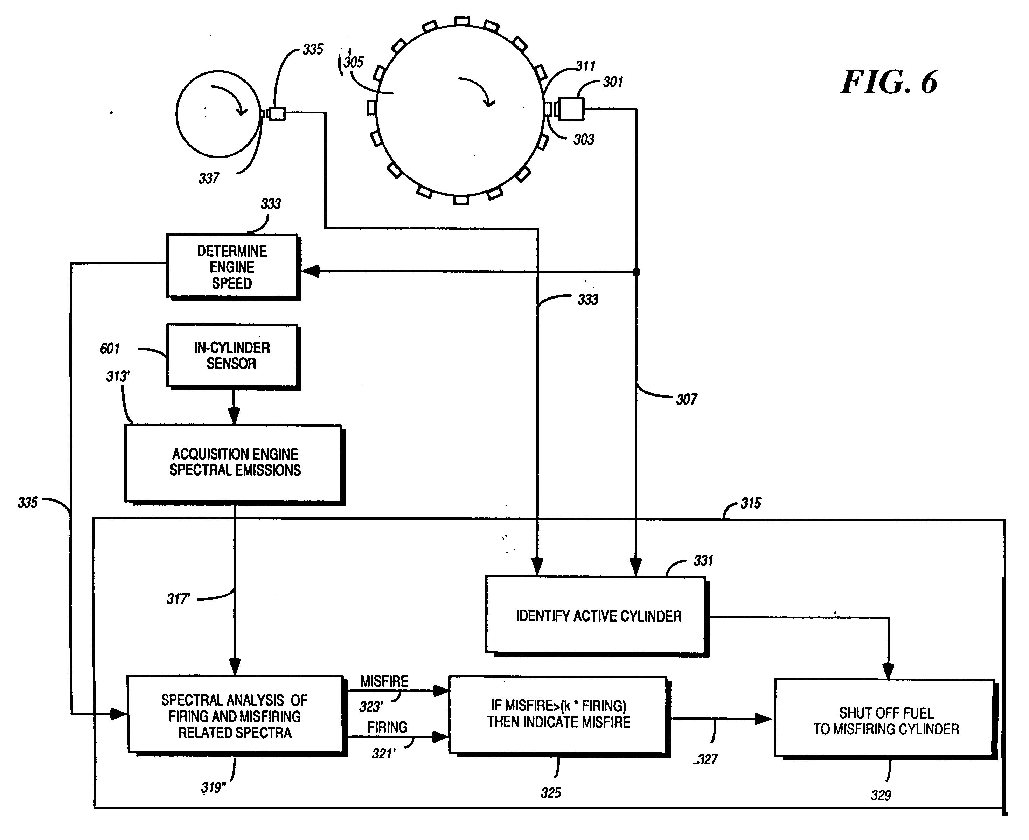

In FIG. 6 an in-cylinder sensor 601 is employed to measure the combustion performance. Various types of sensors can be employed. A subset of these include optical, pressure, and ionization sensors. Also, a sensor on each of the cylinders can be used. If sensors are provided on multiple cylinders then their outputs are preferably combined into the misfire detection system. Alternatively, the sensors may be individually analyzed. FIG. 6 shows the frequency domain approach.

Element 313' inputs combustion information provided by the in-cylinder sensor, 601 at a fixed sampling rate. This element 313' is identical to the element described in FIG. 4. The sampled data 317' is provide to the filter 319' The filter 319' is designed to operate the same as the filter described in FIG. 4. The other elements perform as described earlier in the discussion about FIG. 3.

Alternatively, if the cylinders are individually analyzed, the digital filter is tuned to detect one-half cycles/revolution for a proper firing, and an absence of a firing, or significantly attenuated firing energy at one-half cycles/revolution indicates a misfire.

Of course, the engine synchronous sampling approach may alternatively be employed. In addition to the earlier stated advantages, this approach directly measures the combustion process and is not affected by the extraneous systemic noise sources, such as crankshaft torsional effects, that affect the other sensing techniques.

In conclusion, a system for detecting the presence of a misfire condition by monitoring spectral activity through measuring motion associated with an acceleration characteristic indicative of performance of a combustion process of a running engine, has been presented. The preferred and alternative embodiments overcome the significant disadvantages of the prior art. Improvements include a more accurate detection of a misfiring condition because the measurement path is direct, there is an improved insensitivity to external influences, a singular measurement path not effected by multi-path induced errors, and this approach avoids any inaccuracy due to multi-cycle averaging. This system is also more stable and the results more predictable, because of the digital filter implementation. Further, this approach is more responsive to transient engine operating conditions because no multi-cycle averaging is employed. This approach is also independent of energy emitted and does not pose a loading problem on the measured engine as prior art systems did. Because all engines exhibit the misfire behavior at the known spectra, this system requires minimum calibration, and can be easily applied to different engine families.

**Claims**

1. A system for detecting a misfire condition by interpreting acceleration activity of a running engine comprising:

    means for measuring an acceleration of said running engine, and for providing an acceleration signal representative of said engine's acceleration;

    acceleration discrimination means for receiving the acceleration signal provided by said means for measuring, and for providing a normal firing signal, corresponding to acceleration behaviour attributable to a portion of the acceleration signal representative of normal firing condition and, concurrent to the provision of the normal firing signal, for providing a misfire signal, corresponding to acceleration behaviour attributable to another portion of the acceleration signal representative of a misfiring condition; and

    comparison means for receiving the normal firing signal and the misfire signal, both signals provided by said acceleration discrimination means, and for providing a misfire indication when a magnitude of the misfire signal exceeds a magnitude of the normal firing signal.

2. A system in accordance with claim 1 wherein said means for measuring an acceleration comprises means for measuring engine angular acceleration corresponding to an angular displacement of said running engine.

3. A system in accordance with claim 1, wherein said means for measuring an acceleration comprises means for measuring acceleration corresponding to vibration of said running engine.

4. A system in accordance with claim 1, wherein said means for measuring an acceleration comprises means for measuring an in-cylinder combustion phenomena dependent on an acceleration behaviour of said running engine.

5. A system in accordance with claim 1 further comprising means for shutting off fuel to a cylinder, responsive to the provision of said misfire indication.

6. A system in accordance with claim 1 wherein said acceleration discrimination means comprises a normal firing acceleration discrimination means responsive to spectral energy attributable to a portion of the composite signal representative of a normal firing condition, and a misfiring signal acceleration discrimination means responsive to spectral energy attributable to a portion of the composite signal representative of a misfiring condition, wherein said misfiring signal acceleration discrimination means is spectrally discriminatory a predetermined fixed spectral distance below said normal firing spectral discrimination means.

7. A system in accordance with claim 6 wherein said misfiring signal spectral discrimination means comprises multiple spectral discrimination means predominantly responsive to frequencies located at one-half, one, and three-halves cycles/revolution of a predominant spectral location of the normal firing spectral discrimination means.

8. A system in accordance with claim 7 further comprising:

    means for providing a synchronisation signal representative of said running engine's speed; and wherein said means for measuring an acceleration of said running engine measures said acceleration at a sample rate responsive to the synchronisation signal provided by said means for providing a synchronisation signal.

9. A system in accordance with claim 6 wherein a predominant spectral location of said acceleration discrimination means are tuneable.

10. A system in accordance with claim 9 further comprising:

    means for providing a synchronisation signal representative of said running engine's speed; and wherein the predominant spectral location of said acceleration discrimination means is tuned responsive to the synchronisation signal provided by said means for providing a synchronisation signal.

11. A system in accordance with claim 1 wherein said means for measuring an acceleration measures the acceleration independent of a measurement path length between a motion associated with the acceleration indicative of performance of a combustion process of said running engine and said means for measuring the acceleration.

12. A system in accordance with claim 1 wherein said means for measuring an acceleration measures the acceleration independent of a measurement path length between said running engine and said means for measuring in a multiple cylinder engine.

13. A system in accordance with claim 12 wherein a coupling media used by said means for measuring an acceleration asserts no load on the engine and has no substantial effect on the acceleration measured.

**Patentansprüche**

1. System zum Erfassen einer Fehlzündungsbedingung durch Interpretieren der Beschleunigungsaktivität einer laufenden Maschine, umfassend:

    •   Mittel zum Messen einer Beschleunigung der laufenden Maschine und zum Liefern eines Beschleunigungssignals, das eine Darstellung der Beschleunigung der Maschine ist;
    •   Mittel zum Diskriminieren der Beschleunigung, das das durch das Mittel zum Messen gelieferte Beschleunigungssignal empfängt, und zum Liefern eines Normalzündungssignals, das dem Beschleunigungsverhalten entspricht, das einem Abschnitt des Beschleunigungssignals zuzuordnen ist, der eine Darstellung der Normalzündungsbedingung ist, und gleichzeitig mit dem Liefern des Normalzündungssignals Liefern eines Fehlzündungssignals, das dem Beschleunigungsverhalten entspricht, das einem anderen Abschnitt des Beschleunigungssignals zuzuordnen ist, der eine Darstellung einer Fehlzündungsbedingung ist; und
    •   Vergleichsmittel zum Empfangen des Normalzündungssignals und des Fehlzündungssignals, wobei beide Signale durch die Mittel zum Diskriminieren der Beschleunigung geliefert werden, und zum Liefern einer Fehlzündungsanzeige, wenn die Größe des Fehlzündungssignals die Größe des Normalzündungssignals übersteigt.

2. System nach Anspruch 1, bei dem das Mittel zum Messen einer Beschleunigung ein Mittel zum Messen der Winkelbeschleunigung der Maschine, die einer Winkelverschiebung der laufenden Maschine entspricht, umfaßt.

3. System nach Anspruch 1, bei dem das Mittel zum Messen einer Beschleunigung ein Mittel zum Messen der Beschleunigung, die der Vibration der laufenden Maschine entspricht, umfaßt.

4. System nach Anspruch 1, bei dem das Mittel zum Messen einer Beschleunigung ein Mittel zum Messen eines im Zylinder auftretenden Verbrennungsphänomens, das von Beschleunigungsverhalten der laufenden Maschine abhängig ist, umfaßt.

**5.** System nach Anspruch 1, das ferner ein Mittel zum Abschalten der Brennstoffzufuhr für einen Zylinder umfaßt, das auf die Bereitstellung der Fehlzündungsanzeige reagiert.

**6.** System nach Anspruch 1, bei dem das Mittel zum Diskriminieren der Beschleunigung ein Mittel zum Diskriminieren der Normalzündungsbeschleunigung umfaßt, das auf die spektrale Energie reagiert, die einem Abschnitt des zusammengesetzten Signals zuzuordnen ist, der eine Darstellung einer Normalzündungsbedingung ist, und ein Mittel zum Diskriminieren des Signals der Fehlzündungsbeschleunigung umfaßt, das auf die spektrale Energie reagiert, die einem Abschnitt des zusammengesetzten Signals zuzuordnen ist, der eine Darstellung einer Fehlzündungsbedingung ist, wobei das Mittel zum Diskriminieren des Signals der Fehlzündungsbeschleunigung einen vorbestimmten festen spektralen Abstand unter diesem Mittel zum Diskriminieren der Normalzündungsbeschleunigung spektral unterscheidet.

**7.** System nach Anspruch 6, bei dem das Mittel zum Diskriminieren des Signals der Fehlzündungsbeschleunigung mehrere Mittel zum spektralen Diskriminieren umfaßt, die bevorzugt auf Frequenzen reagieren, die bei einem halben, einem und drei halben Zyklen/Umdrehung einer bevorzugten spektralen Stelle des Mittels zum spektralen Diskriminieren der Normalzündung angeordnet sind.

**8.** System nach Anspruch 7, ferner umfassend:

- Mittel zum Liefern eines Synchronisationssignals, das eine Darstellung der Drehzahl der laufenden Maschine ist; und

wobei das Mittel zum Messen einer Beschleunigung der laufenden Maschine die Beschleunigung bei einer Abtastrate mißt, die auf das Synchronisationssignal reagiert, das durch das Mittel zum Liefern eines Synchronisationssignals geliefert wird.

**9.** System nach Anspruch 6, bei dem eine bevorzugte spektrale Stelle des Mittels zum Diskriminieren der Beschleunigung abstimmbar ist.

**10.** System nach Anspruch 9, ferner umfassend:

- Mittel zum Liefern eines Synchronisationssignals, das eine Darstellung der Drehzahl der laufenden Maschine ist; und

wobei die bevorzugte spektrale Stelle des Mittels zum Diskriminieren der Beschleunigung in Reaktion auf das von dem Mittel zum Liefern eines Synchronisationssignals gelieferte Synchronisationssignal abgestimmt ist.

**11.** System nach Anspruch 1, bei dem das Mittel zum Messen einer Beschleunigung die Beschleunigung unabhängig von einer Meßweglänge zwischen einer Bewegung, die der Beschleunigung zugehörig ist, die eine Anzeige des Wirkungsgrades eines Verbrennungsvorgangs der laufenden Maschine ist, und dem Mittel zum Messen der Beschleunigung mißt.

**12.** System nach Anspruch 1, bei dem das Mittel zum Messen einer Beschleunigung in einer Mehrzylindermaschine die Beschleunigung unabhängig von einer Meßweglänge zwischen der laufenden Maschine und dem Mittel zum Messen mißt.

**13.** System nach Anspruch 12, bei dem ein Koppelmedium, das durch das Mittel zu Messen einer Beschleunigung verwendet wird, der Maschine keine Belastung aufbürdet und keinen wesentlichen Einfluß auf die gemessene Beschleunigung besitzt.

## Revendications

**1.** Système permettant de détecter une situation de raté d'allumage par interprétation de l'activité d'accélération d'un moteur en train de tourner, le système comprenant :

un moyen servant à mesurer l'accélération dudit moteur en train de tourner, et à produire un signal d'accélération représentatif de ladite accélération du moteur ;

un moyen de discrimination d'accélération servant à recevoir le signal d'accélération produit par ledit moyen de mesure et à produire un signal d'explosion normale, correspondant au comportement d'accélération que l'on peut attribuer à la partie du signal d'accélération qui est représentative d'une situation d'explosion normale et, en même temps que la fourniture du signal d'explosion normale, à fournir un signal de raté d'allumage, correspondant au comportement d'accélération qui peut être attribué à une autre partie du signal d'accélération, représentative d'une situation de raté d'allumage ; et

un moyen de comparaison servant à recevoir le signal d'explosion normale et le signal de raté d'allumage, les deux signaux étant produits par ledit moyen de discrimination d'accélération, et à produire une indication de raté d'allumage lorsque l'amplitude du signal de raté d'allumage dépasse l'amplitude du signal d'explosion normale.

2. Système selon la revendication 1, où ledit moyen servant à mesurer l'accélération comprend un moyen permettant de mesurer l'accélération angulaire du moteur en correspondance avec le déplacement angulaire dudit moteur en train de tourner.

3. Système selon la revendication 1, où ledit moyen servant à mesurer l'accélération comprend un moyen permettant de mesurer l'accélération en correspondance avec la vibration dudit moteur en train de tourner.

4. Système selon la revendication 1, où ledit moyen servant à mesurer l'accélération comprend un moyen permettant de mesurer le phénomène de combustion dans le cylindre, qui dépend du comportement d'accélération dudit moteur en train de tourner.

5. Système selon la revendication 1, comprenant en outre un moyen permettant de couper l'alimentation en carburant d'un cylindre, en réponse à la fourniture de ladite indication de raté d'allumage.

6. Système selon la revendication 1, où ledit moyen de discrimination d'accélération comprend un moyen de discrimination d'accélération pour les explosions normales, qui répond à l'énergie spectrale pouvant être attribuée à la partie du signal composite qui est représentative d'une situation d'explosion normale, et un moyen de discrimination d'accélération pour le signal de raté d'allumage, qui répond à l'énergie spectrale pouvant être attribuée à la partie du signal composite qui est représentative d'une situation de raté d'allumage, où ledit moyen de discrimination d'accélération pour le signal de raté d'allumage exerce une discrimination spectrale relativement à une distance spectrale fixe prédéterminée située en dessous dudit moyen de discrimination spectrale d'explosion normale.

7. Système selon la revendication 6, où ledit moyen de discrimination spectrale pour le signal de raté d'allumage comprend un moyen de discrimination spectrale multiple qui répond de façon prédominante aux fréquences situées à un demi-, un et trois demi-cycles/révolution d'une position spectrale prédominante du moyen de discrimination spectrale d'explosion normale.

8. Système selon la revendication 7, comprenant en outre :

un moyen servant à produire un signal de synchronisation représentatif de la vitesse dudit moteur en train de tourner ; et
où ledit moyen servant à mesurer l'accélération dudit moteur en train de tourner mesure ladite accélération avec une fréquence d'échantillonnage qui est fonction du signal de synchronisation produit par ledit moyen servant à produire un signal de synchronisation.

9. Système selon la revendication 6, où les positions spectrales prédominantes dudit moyen de discrimination d'accélération sont accordables.

10. Système selon la revendication 9, comprenant en outre :

un moyen servant à produire un signal de synchronisation représentatif de la vitesse dudit moteur en train de tourner ; et
où la position spectrale prédominante dudit moyen de discrimination d'accélération est agrandie en fonction du signal de synchronisation produit par ledit moyen servant à produire un signal de synchronisation.

11. Système selon la revendication 1, où ledit moyen servant à mesurer l'accélération mesure l'accélération indépendamment de la longueur du trajet de mesure entre un mouvement associé avec l'accélération indicative des performances d'un processus de combustion dudit moteur en train de tourner et ledit moyen servant à mesurer l'accélération.

12. Système selon la revendication 1, où ledit moyen servant à mesurer l'accélération mesure l'accélération indépendamment de la longueur du trajet de mesure entre le moteur en train de tourner et le moyen servant à effectuer la mesure dans un moteur à plusieurs cylindres.

13. Système selon la revendication 12, où le moyen de couplage utilisé par ledit moyen de mesure d'accélération n'impose aucune charge au moteur et n'a sensiblement aucun effet sur l'accélération mesurée.

## FIG. 1

POWER

101
103
105
107

3
6
9

FREQUENCY OF OCCURRENCE IN CYCLES/REVOLUTION

## FIG. 2

POWER

101'
103'
105'

1/2    1    3/2    2    5/2    3         6         9

201    203    205    207    209

FIG. 3

EP 0 709 664 B1

*FIG. 4*

DETERMINE ENGINE SPEED

DETERMINE CRANKSHAFT ACCELERATION

ACQUISITION ENGINE SPECTRAL EMISSIONS

IDENTIFY ACTIVE CYLINDER

SPECTRAL ANALYSIS OF FIRING AND MISFIRING RELATED SPECTRA

MISFIRE

FIRING

IF MISFIRE>(k * FIRING) THEN INDICATE MISFIRE

SHUT OFF FUEL TO MISFIRING CYLINDER

**FIG. 5**

EP 0 709 664 B1

FIG. 6

## FIG. 7

# FIG. 8

EP 0 709 664 B1